(19) Europäisches Patentamt
European Patent Office
Office européen des brevets

(11) EP 1 891 624 B1

(12) **EUROPEAN PATENT SPECIFICATION**

(45) Date of publication and mention
of the grant of the patent:
**04.05.2011 Bulletin 2011/18**

(51) Int Cl.:
*G10L 15/14* (2006.01)   *G10L 21/00* (2006.01)
*G10L 21/02* (2006.01)   *G10L 15/00* (2006.01)

(21) Application number: **06772956.6**

(86) International application number:
**PCT/US2006/022863**

(22) Date of filing: **13.06.2006**

(87) International publication number:
**WO 2007/001821 (04.01.2007 Gazette 2007/01)**

(54) **MULTI-SENSORY SPEECH ENHANCEMENT USING A SPEECH-STATE MODEL**

MULTISENSORISCHE SPRACHVERSTÄRKUNG UNTER VERWENDUNG EINES
SPRACHSTATUSMODELLS

AMELIORATION VOCALE MULTIDETECTION PAR MODELE D'ETAT VOCAL

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.06.2005 US 168770**

(43) Date of publication of application:
**27.02.2008 Bulletin 2008/09**

(73) Proprietor: **MICROSOFT CORPORATION**
Redmond, Washington 98052-6399 (US)

(72) Inventors:
 • **ZHANG, Zhengyou**
 **Redmond, Washington 98052-6399 (US)**
 • **LIU, Zicheng**
 **Redmond, WA 98052 (US)**
 • **ACERO, Alejandro**
 **Redmond, WA 98052 (US)**
 • **SUBRAMANYA, Amarnag**
 **c/o Microsoft Corporation**
 **Redmond, WA 98052 (US)**
 • **DROPPO, James, G.**
 **Redmond, WA 98052 (US)**

(74) Representative: **Grünecker, Kinkeldey,
Stockmair & Schwanhäusser
Anwaltssozietät
Leopoldstrasse 4
80802 München (DE)**

(56) References cited:
 US-A- 5 590 241       US-A1- 2004 002 858
 US-A1- 2004 111 260   US-A1- 2004 267 536
 US-B1- 6 594 629      US-B1- 6 778 954

 • ZICHENG LIU ET AL: "Direct filtering for air- and
 bone-conductive microphones" MULTIMEDIA
 SIGNAL PROCESSING, 2004 IEEE 6TH
 WORKSHOP ON SIENA, ITALY SEPT. 29 - OCT.
 1, 2004, PISCATAWAY, NJ, USA,IEEE, 29
 September 2004 (2004-09-29), pages 363-366,
 XP010802161 ISBN: 978-0-7803-8578-8
 • ZHENG ET AL.: 'Air- and Bone-Conductive
 Integrated Microphones for Robust Speech
 Detection and Enhancement' AUTOMATIC
 SPEECH RECOGNITION AND UNDERSTANDING,
 IEEE WORKSHOP December 2003, pages 249 -
 254, XP010713318
 • HERSHEY ET AL.: 'Model-based Fusion of Bone
 and Air Sensors for Speech Enhancement and
 Robust Speech Recognition' ISCA ITRW ON
 STATISTICAL AND PERCEPTUAL AUDIO
 PROCESSING October 2004, pages 1 - 6

**Description**

BACKGROUND

A common problem in speech recognition and speech transmission is the corruption of the speech signal by additive noise. In particular, corruption due to the speech of another speaker has proven to be difficult to detect and/or correct.

Recently, systems have been developed that attempt to remove noise by using a combination of an alternative sensor, such as a bone conduction microphone, and an air conduction microphone. Various techniques have been developed that use the alternative sensor signal and the air conduction microphone signal to form an enhanced speech signal that has less noise than the air conduction microphone signal. However, perfectly enhanced speech has not been achieved and further advances in the formation of enhanced speech signals are needed.

US 2004 111260 A1 relates to signal source separation. The described technique is for separating a signal associated with a first source from a mixture of the first source signal and a signal associated with a second source. Two signals respectively representative of two mixtures of the first and second source signals are obtained, the first source signal is separated from the mixture in a non-linear signal domain using the two mixture signals and at least one known statistical property associated with the first source and the second source without a need to use a reference signal. The speech recognition system comprises an alignment and scaling module, first and second feature extractors, a source separation module, a post separation processing module and a speech recognition engine. First, observed waveform mixtures are aligned and scaled to compensate for delays and attenuations. An estimate of the second source is computed from the observed second mixture and from an estimated value. A further estimate of the first source is computed from the observed mixture and a second estimated value. These steps are iterated.

It is the object of the present invention to provide an improved estimate of a clean speech value for a speech signal.

This object is solved by the subject matter of the independent claims.

Preferred embodiments are defined in the dependent claims.

SUMMARY

A method and apparatus determine a likelihood of a speech state based on an alternative sensor signal and an air conduction microphone signal. The likelihood of the speech state is used to estimate a clean speech value for a clean speech signal.

BRIEF DESCRIPTION OF THE DRAWINGS

FIG. 1 is a block diagram of one computing environment in which embodiments of the present invention may be practiced.

FIG. 2 is a block diagram of an alternative computing environment in which embodiments of the present invention may be practiced.

FIG. 3 is a block diagram of a general speech processing system of the present invention.

FIG. 4 is a block diagram of a system for enhancing speech under one embodiment of the present invention.

FIG. 5 is a model on which speech enhancement is based under one embodiment of the present invention.

FIG. 6 is a flow diagram for enhancing speech under an embodiment of the present invention.

DETAILED DESCRIPTION OF ILLUSTRATIVE EMBODIMENTS

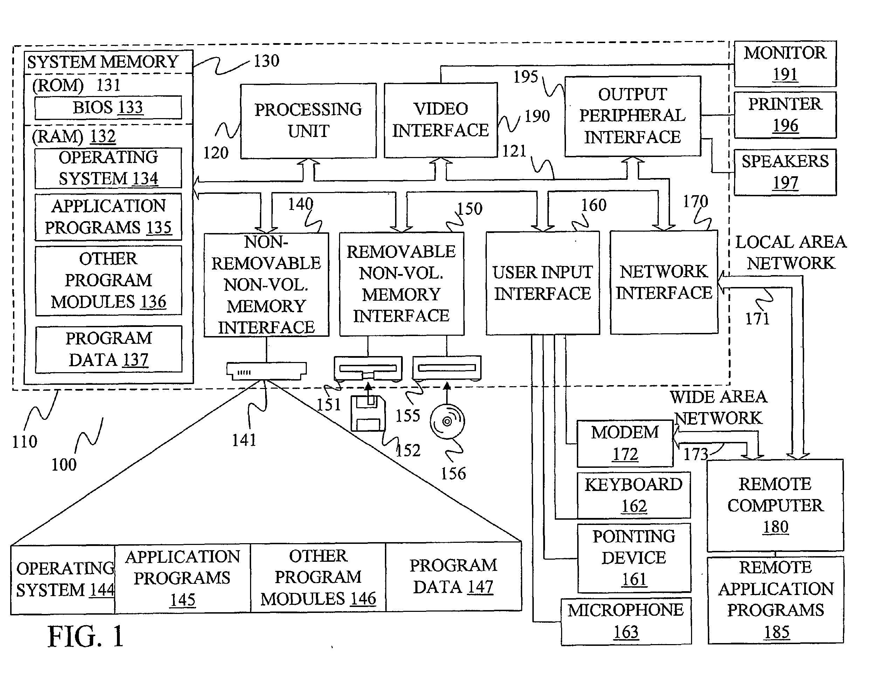

FIG. 1 illustrates an example of a suitable computing system environment 100 on which embodiments of the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

Embodiments of the invention are operational with numerous other general purpose or special purpose computing system environments or configurations. Examples of well-known computing systems, environments, and/or configurations that may be suitable for use with embodiments of the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

Embodiments of the invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

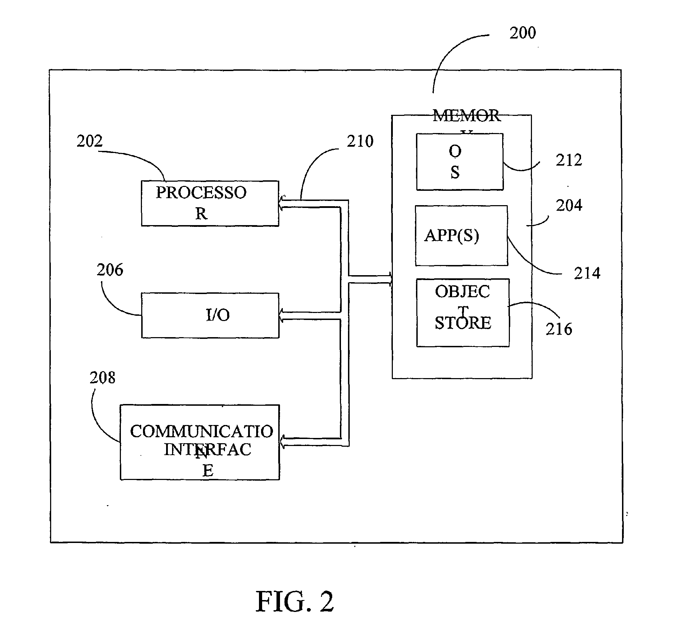

FIG. 2 is a block diagram of a mobile device 200, which is an exemplary computing environment. Mobile device 200 includes a microprocessor 202, memory 204, input/output (I/O) components 206, and a communication interface 208 for communicating with remote computers or other mobile devices. In one embodiment, the afore-mentioned components are coupled for communication with one another over a suitable bus 210.

Memory 204 is implemented as non-volatile electronic memory such as random access memory (RAM) with a battery backup module (not shown) such that information stored in memory 204 is not lost when the general power to mobile device 200 is shut down. A portion of memory 204 is preferably allocated as addressable memory for program execution, while another portion of memory 204 is preferably used for storage, such as to simulate storage on a disk drive.

Memory 204 includes an operating system 212, application programs 214 as well as an object store 216. During operation, operating system 212 is preferably executed by processor 202 from memory 204. Operating system 212, in one preferred embodiment, is a WINDOWS® CE brand operating system commercially available from Microsoft Corporation. Operating system 212 is preferably designed for mobile devices, and implements database features that can be utilized by applications 214 through a set of exposed application programming interfaces and methods. The objects in object store 216 are maintained by applications 214 and operating system 212, at least partially in response to calls to the exposed application programming interfaces and methods.

Communication interface 208 represents numerous devices and technologies that allow mobile device 200 to send and receive information. The devices include wired and wireless modems, satellite receivers and broadcast tuners to name a few. Mobile device 200 can also be directly connected to a computer to exchange data therewith. In such cases, communication interface 208 can be an infrared transceiver or a serial or parallel communication connection, all of which are capable of transmitting streaming information.

Input/output components 206 include a variety of input devices such as a touch-sensitive screen, buttons, rollers, and a microphone as well as a variety of output devices including an audio generator, a vibrating device, and a display. The devices listed above are by way of example and need not all be present on mobile device 200. In addition, other input/output devices may be attached to or found with mobile device 200 within the scope of the present invention.

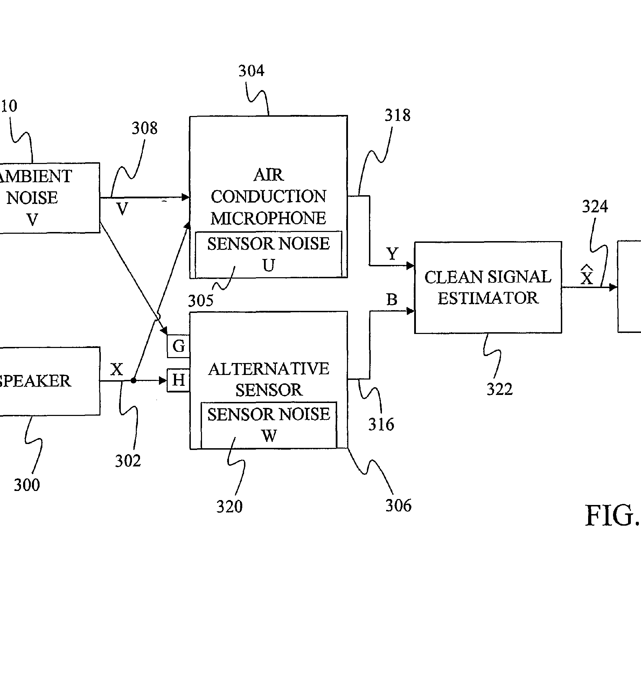

FIG. 3 provides a basic block diagram of embodiments of the present invention. In FIG. 3, a speaker 300 generates a speech signal 302 (X) that is detected by an air conduction microphone 304 and an alternative sensor 306. Examples of alternative sensors include a throat microphone that measures ) the user's throat vibrations, a bone conduction sensor that is located on or adjacent to a facial or skull bone of the user (such as the jaw bone) or in the ear of the user and that senses vibrations of the skull and jaw that correspond to speech generated by the user. Air conduction microphone 304 is the type of microphone that is used commonly to convert audio air-waves into electrical signals.

Air conduction microphone 304 receives ambient noise 308. (V) generated by one or more noise sources 310 and generates its own sensor noise 305 (U). Depending on the type ) of ambient noise and the level of the ambient noise, ambient noise 308 may also be detected by alternative sensor 306. However, under embodiments of the present invention, alternative sensor 306 is typically less sensitive to ambient noise than air conduction microphone 304. Thus, the alternative sensor signal 316 (B) generated by alternative sensor 306 generally includes less noise than air conduction microphone signal 318 (Y) generated by air conduction microphone 304. Although alternative sensor 306 is less sensitive to ambient noise, it does generate some sensor noise 320 (W).

The path from speaker 300 to alternative sensor signal 316 can be modeled as a channel having a channel response H. The path from ambient noise 308 to alternative sensor signal 316 can be modeled as a channel having a channel response G.

Alternative sensor signal 316 (B) and air conduction microphone signal 318 (Y) are provided to a clean signal estimator 322, which estimates a clean signal 324. Clean signal estimate 324 is provided to a speech process 328. Clean signal estimate 324 may either be a time-domain signal or a Fourier Transform vector. If clean signal estimate 324 is a time-domain signal, speech process 328 may take the form of a listener, a speech coding system, or a speech recognition system. If clean signal estimate 324 is a Fourier Transform vector, speech process 328 will typically be a speech recognition system, or contain an Inverse Fourier Transform to convert the Fourier Transform vector into waveforms.

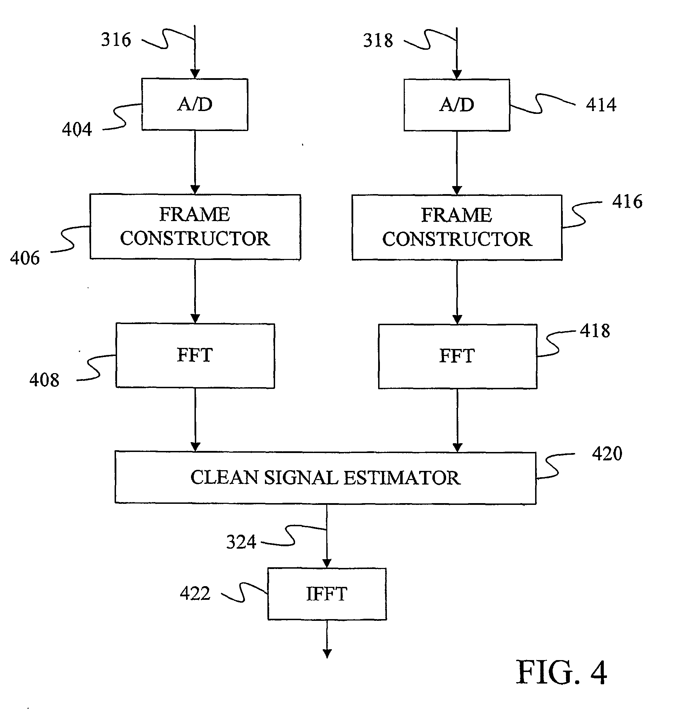

Within clean signal estimator 322, alternative sensor signal 316 and microphone signal 318 are converted into the frequency domain being used to estimate the clean speech. As shown in FIG. 4, alternative sensor signal 316 and air conduction microphone signal 318 are provided to analog-to-digital converters 404 and 414, respectively, to generate a sequence of digital values, which are grouped into frames of values by frame constructors 406 and 416, respectively. In one embodiment, A-to-D converters 404 and 414 sample the analog signals at 16 kHz and 16 bits per sample, thereby creating 32 kilobytes of speech data per second and frame constructors 406 and 416 create a new respective frame every 10 milliseconds that includes 20 milliseconds worth of data.

Each respective frame of data provided by frame constructors 406 and 416 is converted into the frequency domain using Fast Fourier Transforms (FFT) 408 and 418, respectively.

The frequency domain values for the alternative sensor signal and the air conduction microphone signal are provided to clean signal estimator 420, which uses the frequency domain values to estimate clean speech signal 324.

Under some embodiments, clean speech signal 324 is converted back to the time domain using Inverse Fast Fourier Transforms 422. This creates a time-domain version of clean speech signal 324.

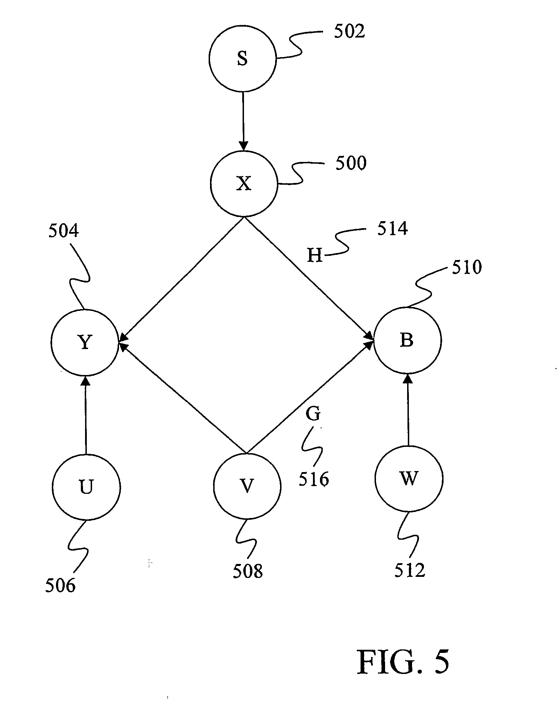

The present invention utilizes a model of the system of FIG. 3 that includes speech states for the clean speech in order to produce an enhanced speech signal. FIG. 5 provides a graphical representation of the model.

In the model of FIG. 5, clean speech 500 is dependent upon a speech state 502. Air conduction microphone signal 504 is dependent on sensor noise 506, ambient noise 508 and clean speech signal 500. Alternative sensor signal 510 is dependent on sensor noise 512, clean speech signal 500 as it passes through a channel response 514 and ambient noise 508 as it passes through a channel response 516.

The model of FIG. 5 is used under the present invention to estimate a clean speech signal $X_t$ from noisy observations $Y_t$ and $B_t$ and identifies the likelihood of a plurality of speech states $S_t$.

Under one embodiment of the present invention, the clean speech signal estimate and the likelihoods of the states for the clean speech signal estimate are formed by first assuming Gaussian distributions for the noise components in the system model. Thus:

$$V \sim N(0, g^2 \sigma_v^2) \qquad \text{EQ. 1}$$

$$U \sim N(0, \sigma_u^2) \qquad \text{EQ. 2}$$

$$W \sim N(0, \sigma_w^2) \qquad \text{EQ. 3}$$

where each noise component is modeled as a zero-mean Gaussian having respective variances $g^2 \sigma_v^2$, $\sigma_u^2$, and $\sigma_w^2$, V is the ambient noise, U is the sensor noise in the air conduction microphone, and W is the sensor noise in the alternative sensor. In EQ. 1, g is a tuning parameter that allows the variance of the ambient noise to be tuned.

In addition, this embodiment of the present invention models the probability of the clean speech signal given a state as a zero-mean Gaussian with a variance $\sigma^2_s$ such that:

$$X \mid (S = s) \sim N(0, \sigma_s^2) \qquad \text{EQ. 4}$$

Under one embodiment of the present invention, the prior probability of a given state is assumed to be a uniform probability such that all states are equally likely. Specifically, the prior probability is defined as:

$$P(s_t) = \frac{1}{N_s}$$

EQ. 5

where $N_s$ is the number of speech states available in the model.

In the description of the equations below for determining the estimate of the clean speech signal and the likelihood of the speech states, all of the variables are modeled in the complex spectral domain. Each frequency component (Bin) is treated independently of the other frequency components. For ease of notation, the method is described below for a single frequency component. Those skilled in the art will recognize that the computations are performed for each frequency component in the spectral version of the input signals. For variables that vary with time, a subscript t is added to the variable.

To estimate the clean speech signal $X_t$ from the noisy observations $Y_t$ and $B_t$, the present invention maximizes the conditional probability $p(X_t|Y_t,B_t)$, which is the probability of the clean speech signal given the noisy air conduction microphone signal and the noisy alternative sensor signal. Since the estimate of the clean speech signal depends on the speech state $S_t$ under the model, this conditional probability is determined as:

$$p(X_t \mid Y_t, B_t) = \sum_{s \in \{S\}} p(X_t \mid Y_t, B_t, S_t = s) p(S_t = s \mid Y_t, B_t)$$

EQ. 6

where $\{S\}$ denotes the set of all speech states, $p(X_t|Y_t,B_t,S_t=s)$ is the likelihood of $X_t$ given the current noisy observations and the speech state s, and $p(S_t=s|Y_t,B_t)$ is the likelihood of the speech state s given the noisy observations. Any number of possible speech states may be used under the present invention, including speech states for voiced sounds, fricatives, nasal sounds and back vowel sounds. In some embodiments, a separate speech state is provided for each of a set of phonetic units, such as phonemes. Under one embodiment, however, only two speech states are provided, one for speech and one for non-speech.

Under some embodiments, a single state is used for all of the frequency components. Therefore, each frame has a single speech state variable.

The terms on the right hand side of EQ. 6 can be calculated as:

$$p(X_t \mid Y_t, B_t, S_t = s) = \frac{p(X_t, Y_t, B_t, S_t = s)}{p(Y_t, B_t, S_t = s)} \propto p(X_t, Y_t, B_t, S_t = s)$$

EQ. 7

$$p(S_t = s \mid Y_t, B_t) = \int_X \frac{p(X_t, Y_t, B_t, S_t = s)}{p(Y_t, B_t)} dX \propto \int_X p(X_t, Y_t, B_t, S_t = s) dX$$

EQ. 8

which indicate that the conditional probability of the clean speech signal given the observations can be estimated by the joint probability of the clean speech signal, the observations and the state and that the conditional probability of the state given the observations can be approximated by integrating the joint probability of the clean speech signal, the observations and the state over all possible clean speech values.

Using the Gaussian assumptions for the distributions of the noise discussed above in equations 1-3, the joint probability of the clean speech signal, the observations and the state can be computed as:

$$p(X_t,S_t,Y_t,B_t) = N(Y_t;X_t,\sigma_u^2+g^2\sigma_v^2)p(X_t\mid S_t)p(S_t)\cdot$$
$$N(G\frac{g^2\sigma_v^2(Y_t-X_t)}{\sigma_u^2+g^2\sigma_v^2};B_t-HX_t,\sigma_w^2+\mid G\mid^2\frac{g^2\sigma_v^2\sigma_u^2}{\sigma_u^2+g^2\sigma_v^2})$$

$$\text{EQ. 9}$$

where $p(X_t\mid S_t=s)=N(X_t;0,\sigma_s^2)$, $p(S_t)$ is the prior probability of the state which is given by the uniform probability distribution in EQ. 5, G is the channel response of the alternative sensor to the ambient noise, H is the channel response of the alternative sensor signal to the clean speech signal, and complex terms between vertical bars such as, $\mid G\mid$, indicate the magnitude of the complex value.

The alternative sensor's channel response G for background speech is estimated from the signals of the air microphone Y and of the alternative sensor B across the last D frames in which the user is not speaking. Specifically, G is determined as:

$$G=\frac{\sum_{t=1}^{D}(\sigma_u^2\mid B_t\mid^2-\sigma_w^2\mid Y_t\mid^2)\pm\sqrt{(\sum_{t=1}^{D}(\sigma_u^2\mid B_t\mid^2-\sigma_w^2\mid Y_t\mid^2))^2+4\sigma_u^2\sigma_w^2\mid\sum_{t=1}^{D}B_t^*Y_t\mid^2}}{2\sigma_u^2\sum_{t=1}^{D}B_t^*Y_t}$$

$$\text{Eq. 10}$$

where D is the number of frames in which the user is not speaking but there is background speech. Here, we assume that G is constant across all time frames D. In other embodiments, instead of using all the D frames equally, we use a technique known as "exponential aging" so that the latest frames contribute more to the estimation of G than the older frames.

The alternative sensor's channel response H for the clean speech signal is estimated from the signals of the air microphone Y and of the alternative sensor B across the last T frames in which the user is speaking. Specifically, H is determined as:

$$H=\frac{\sum_{t=1}^{T}(g^2\sigma_v^2\mid B_t\mid^2-\sigma_w^2\mid Y_t\mid^2)\pm\sqrt{(\sum_{t=1}^{T}(g^2\sigma_v^2\mid B_t\mid^2-\sigma_w^2\mid Y_t\mid^2))^2+4g^2\sigma_v^2\sigma_w^2\mid\sum_{t=1}^{T}B_t^*Y_t\mid^2}}{2g^2\sigma_v^2\sum_{t=1}^{T}B_t^*Y_t}$$

$$\text{Eq. 11}$$

where T is the number of frames in which the user is speaking. Here, we assume that H is constant across all time frames T. In other embodiments, instead of using all the T frames equally, we use a technique known as "exponential aging" so that the latest frames contribute more to the estimation of H than the older frames.

The conditional likelihood of the state $p(S_t=s\mid Y_t,B_t)$ is computed using the approximation of EQ. 8 and the joint probability calculation of EQ. 9 as:

$$p(S_t \mid Y_t, B_t) \propto \int_x N(Y_t; X_t, \sigma_u^2 + g^2\sigma_v^2) \cdot$$

$$N(G\frac{g^2\sigma_v^2(Y_t - X_t)}{\sigma_u^2 + g^2\sigma_v^2}; B_t - HX_t, \sigma_w^2 + |G|^2 \frac{g^2\sigma_v^2\sigma_u^2}{\sigma_u^2 + g^2\sigma_v^2}) \cdot$$

$$p(X_t \mid S_t)p(S_t)dX$$

$$\text{EQ. 12}$$

which can be simplified as:

$$p(S_t|Y_t,B_t) \propto$$

$$N(B_t; \frac{(\sigma_s^2 H + g^2\sigma_v^2 G)Y_t}{\sigma_s^2 + g^2\sigma_v^2 + \sigma_u^2}, \sigma_w^2 + |G|^2 \frac{g^2\sigma_v^2\sigma_u^2}{\sigma_u^2 + g^2\sigma_v^2} + |H - G\frac{g^2\sigma_v^2}{\sigma_u^2 + g^2\sigma_v^2}|^2 \frac{\sigma_s^2(\sigma_u^2 + g^2\sigma_v^2)}{\sigma_s^2 + \sigma_u^2 + g^2\sigma_v^2})$$

$$N(Y_t; 0, \sigma_s^2 + \sigma_u^2 + g^2\sigma_v^2)p(S_t)$$

$$\text{EQ. 13}$$

A close look at EQ. 13 reveals that the first term is in some sense modeling the correlation between the alternative sensor channel and the air conduction microphone channel whereas the second term makes use of the state model and the noise model to explain the observation in the air microphone channel. The third term is simply the prior on the state, which under one embodiment is a uniform distribution.

The likelihood of the state given the observation as computed in EQ. 13 has two possible applications. First, it can be used to build a speech-state classifier, which can be used to classify the observations as including speech or not including speech so that the variances of the noise sources can be determined from frames that do not include speech. It can also be used to provide a "soft" weight when estimating the clean speech signal as shown further below.

As noted above, each of the variables in the above equations is defined for a particular frequency component in the complex spectral domain. Thus, the likelihood of EQ. 13 is for a state associated with a particular frequency component. However, since there is only a single state variable for each frame, the likelihood of a state for a frame is formed by aggregating the likelihood across the frequency components as follows:

$$L(S_t) = \prod_f L(S_t(f))$$

$$\text{EQ. 14}$$

where $L(S_t(f))=p(S_t(f)|Y_t(f),B_t(f))$ is the likelihood for the frequency component f as defined in EQ. 13. The product is determined over all frequency components except the DC and Nyquist frequencies. Note that if the likelihood computation is carried out in the log-likelihood domain, then the product in the above equation is replaced with a summation.

The above likelihood can be used to build a speech/non-speech classifier, based on a likelihood ratio test such that:

$$r = \log\frac{L(S_t = speech)}{L(S_t = non-speech)}$$

$$\text{EQ. 15}$$

where a frame is considered to contain speech if the ratio r is greater than 0 and is considered to not contain speech otherwise.

Using the likelihood of the speech states, an estimate of the clean speech signal can be formed. Under one embodiment, this estimate is formed using a minimum mean square estimate (MMSE) based on EQ. 6 above such that:

$$\hat{X}_t = E(X_t \mid Y_t, B_t) = \sum_{s \in \{S\}} p(S_t = s \mid Y_t, B_t) E(X_t \mid Y_t, B_t, S_t = s)$$

$$\text{EQ. 16}$$

where $E(X_t|Y_t,B_t)$ is the expectation of the clean speech signal given the observation, and $E(X_t|Y_t,B_t,S_t=s)$ is the expectation of the clean speech signal given the observations and the speech state.

Using equations 7 and 9, the conditional probability $P(X_t|Y_t,B_t,S_t=s)$ from which the expectation $E(X_t|Y_t,B_t,S_t=s)$ can be calculated is determined as:

$$p(X_t \mid Y_t, B_t, S_t = s) \propto \quad N(Y_t; X_t, \sigma_u^2 + g^2 \sigma_v^2) \cdot$$
$$N(\frac{g^2 \sigma_v^2 G(Y_t - X_t)}{\sigma_u^2 + g^2 \sigma_v^2}; B_t - HX_t, \sigma_w^2 + \frac{g^2 \sigma_v^2 \sigma_u^2 \mid G \mid^2}{\sigma_u^2 + g^2 \sigma_v^2}) \cdot$$
$$N(X_t; 0, \sigma_s^2) p(S_t = s)$$

$$\text{EQ. 17}$$

This produces an expectation of:

$$E(X_t \mid Y_t, B_t, S_t = s) = \sigma_s^2 (\frac{\sigma_p^2 Y_t + M * ((\sigma_u^2 + g^2 \sigma_v^2) B_t - g^2 \sigma_v^2 G Y_t)}{\sigma_p^2 (\sigma_u^2 + g^2 \sigma_v^2 + \sigma_s^2) + \mid M \mid^2 \sigma_s^2 (\sigma_u^2 + g^2 \sigma_v^2)})$$

$$\text{EQ. 18}$$

where

$$\sigma_p^2 = \sigma_w^2 + \frac{g^2 \sigma_v^2 \sigma_u^2}{\sigma_u^2 + g^2 \sigma_v^2} \mid G \mid^2$$

$$\text{EQ. 19}$$

$$M = H - \frac{g^2 \sigma_v^2}{\sigma_u^2 + g^2 \sigma_v^2} G$$

$$\text{EQ. 20}$$

and M* is the complex conjugate of M.

Thus, the MMSE estimate of the clean speech signal $X_t$ is given by:

$$\hat{X}_t = \sum_{s \in \{S\}} \pi_s E(X_t \mid Y_t, B_t, S_t = s)$$

$$\text{EQ. 21}$$

where $\pi_s$ is the posterior on the state and is given by:

$$\pi_s = \frac{L(S_t = s)}{\sum_{s \in \{S\}} L(S_t = s)}$$

$$\text{EQ. 22}$$

where $E(S_t=s)$ is given by EQ. 14. Thus, the estimate of the clean speech signal is based in part on the relative likelihood of a particular speech state and this relative likelihood provides a soft weight for the estimate of the clean speech signal.
In the calculations above, H was assumed to be known with strong precision. However, in practice, H is only known with limited precision. Under an additional embodiment of the present invention, H is modeled as a Guassian

random variable $N(H; H_0, \sigma_H^2)$. Under such an embodiment, all of the calculations above are marginalized over all possible values of H. However, this makes the mathematics intractable. Under one embodiment, an iterative process is used to overcome this intractability. During each iteration, H is replaced in equations 13 and 20 with Ho and $\sigma_w^2$ is replaced with $\sigma_w^2 + |\hat{X}_t|^2 \sigma_H^2$ where $\hat{X}_t$, is an estimate of the clean speech signal determined from a previous iteration. The clean speech signal is then estimated using EQ. 21. This new estimate of the clean speech signal is then set as the new value of $\hat{X}_t$ and the next iteration is performed. The iterations end when the estimate of the clean speech signal becomes stable.

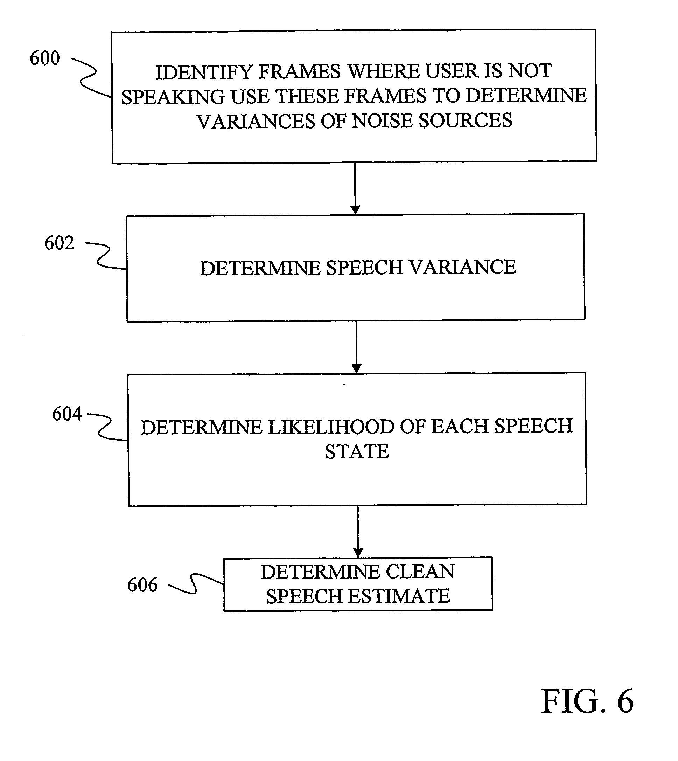

FIG. 6 provides a method of estimating a clean speech signal using the equations above. In step 600, frames of an input utterance are identified where the user is not speaking. These frames are then used to determine the variance for the ambient noise $\sigma_v^2$, the variance for the alternative sensor noise $\sigma_w^2$, and the variance for the air conduction microphone noise $\sigma_u^2$.

To identify frames where the user is not speaking, the alternative sensor signal can be examined. Since the alternative sensor signal will produce much smaller signal values for background speech than for noise, when the energy of the alternative sensor signal is low, it can initially be assumed that the speaker is not speaking. The values of the air conduction microphone signal and the alternative sensor signal for frames that do not contain speech are stored in a buffer and are used to compute variances of the noise as:

$$\hat{\sigma}_v^2 = \frac{1}{N_v} \sum_{all\ t \in V} |Y_t|^2 \qquad\qquad EQ.\ 23$$

$$\hat{\sigma}_w^2 = \frac{1}{N_v} \sum_{all\ t \in V} |B_t'|^2 \qquad\qquad EQ.\ 24$$

where $N_v$ is the number of noise frames in the utterance that are being used to form the variances, V is the set of noise frames where the user is not speaking, and $B_t'$ refers to the alternative sensor signal after leakage has been accounted for, which is calculated as:

$$B_t' = B_t - GY_t \qquad\qquad EQ.\ 25$$

which in some embodiments is alternatively calculated as:

$$B_t' = (1 - \frac{|GY_t|}{|B_t|})B_t \qquad\qquad EQ.\ 26$$

Under some embodiments, the technique of identifying non-speech frames based on low energy levels in the alternative sensor signal is only performed during the initial frames of training. After initial values have been formed for the noise variances, they may be used to determine which frames contain speech and which frames do not contain speech using the likelihood ratio of EQ. 15.

The value of g, which is a tuning parameter that can be used to either increase or decrease the estimated variance $\sigma_v^2$, is set to 1 under one particular embodiment. This suggests complete confidence in the noise estimation procedure. Different values of g may be used under different embodiments of the present invention.

The variance of the noise for the air conduction microphone, $\sigma_u^2$, is estimated based on the observation that the air conduction microphone is less prone to sensor noise than the alternative sensor. As such, the variance of the air conduction microphone can be calculated as:

$$\sigma_u^2 = 1e^{-4}\sigma_w^2 \qquad\qquad EQ. \; 27$$

At step 602, the speech variance $\sigma_s^2$ is estimated using a noise suppression filter with temporal smoothing. The suppression filter is a generalization of spectral subtraction. Specifically, the speech variance is calculated as:

$$\hat{\sigma}_s^2 = \tau \mid \hat{X}_{t-1} \mid^2 + (1-\tau) K_s^2 \mid Y_t \mid^2 \qquad\qquad EQ. \; 28$$

where

$$K_s = \begin{cases} [1 - \alpha Q^{\gamma 1}]^{\gamma 2} & if \quad Q^{\gamma 1} < 1/(\alpha + \beta) \\ [\beta Q^{\gamma 1}]^{\gamma 2} & otherwise \end{cases} \qquad EQ. \; 29$$

with

$$Q = \frac{\sigma_v}{\mid Y_t \mid} \qquad\qquad EQ. \; 30$$

where $\overset{\wedge}{X}_{t-1}$, is the clean speech estimate from the preceding frame, $\tau$ is a smoothing factor which in some embodiments is set to .2, $\alpha$ controls the extent of noise reduction such that if $\alpha > 1$, more noise is reduced at the expense of increase speech distortion, and $\beta$ gives the minimum noise floor and provides a means to add background noise to mask the perceived residual musical noise. Under some embodiments, $\gamma 1 = 2$ and $\gamma 2 = 1/2$. In some embodiments, $\beta$ is set equal to 0.01 for 20 dB noise reduction for pure noise frames.

Thus, in EQ. 28, the variance is determined as a weighted sum of the estimated clean speech signal of the preceding frame and the energy of the air conduction microphone signal filtered by the noise suppression filter $K_s$.

Under some embodiments, $\alpha$ is chosen according to a signal to noise ratio and a masking principle which has shown that the same amount of noise in a high speech energy band has a smaller impact in perception than in a low speech energy band and the presence of high speech energy at one frequency will reduce the perception of noise in an adjacent frequency band. Under this embodiment, $\alpha$ is chosen as:

$$\alpha = \begin{cases} \alpha_0 (1 - SNR/B) & if \; SNR < B \\ 0 & otherwise \end{cases} \qquad EQ. \; 31$$

where SNR is the signal-to-noise ratio in decibels (dB), B is the desired signal-to-noise ratio level above which noise reduction should not be performed and $\alpha_0$ is the amount of noise that should be removed at a signal-to-noise ratio value of 0. Under some embodiments, B is set equal to 20 dB.

Using a definition of signal to noise ratio of:

$$SNR = 10 \log(\frac{\mid Y_t \mid^2 - \sigma_v^2}{\sigma_v^2}) \qquad\qquad EQ. \; 32$$

the noise suppression filter of EQ. 29 becomes:

$$K_s = \begin{cases} [1 - \alpha_0 (1 - SNR/B)/(1 + 10^{SNR/10})]^{1/2} & if \quad Q^2 < 1/\alpha + \beta) \\ [\beta Q^2]^{1/2} & otherwise \end{cases} \qquad EQ. \quad 33$$

This noise suppression filter provides weak noise suppression for positive signal-to-noise ratios and stronger noise suppression for negative signal-to-noise ratios. In fact, for sufficiently negative signal-to-noise ratios, all of the observed signal and noise are removed and the only signal present is a noise floor that is added back by the "otherwise" branch of the noise suppression filter of Eq. 33.

Under some embodiments, $\alpha_0$ is made frequency-dependent such that different amounts of noise are removed for different frequencies. Under one embodiment, this frequency dependency is formed using a linear interpolation between $\alpha_0$ at 30Hz and $\alpha_0$ at 8KHz such that:

$$\alpha_0(k) = \alpha_{0min} + (\alpha_{0max} - \alpha_{0min})k/225 \qquad EQ. \quad 34$$

where k is the count of the frequency component, $\sigma_{0min}$ is the value of $\alpha_0$ desired at 30Hz, $\alpha_{0max}$ is the $\alpha_0$ desired at 8KHz and it is assumed that there are 256 frequency components.

After the speech variance has been determined at step 602, the variances are used to determine the likelihood of each speech state at step 604 using equations 13 and 14 above. The likelihood of the speech states is then used in step 606 to determine a clean speech estimate for the current frame. As noted above, in embodiments in which a Gaussian distribution is used to represent H, steps 604 and 606 are iterated using the latest estimate of the clean speech signal in each iteration and using the changes to the equations discussed above to accommodate the Gaussian model for H.

Although the present invention has been described with reference to particular embodiments, workers skilled in the art will recognize that changes may be made in form and detail without departing from the scope of the invention. The invention is solely defined by the appended claims.

**Claims**

1.  A method of determining an estimate for a noise-reduced value representing a portion of a noise-reduced speech signal, the method comprising:

    generating an alternative sensor signal using an alternative sensor, the alternative sensor being less sensitive to ambient noise then an air conduction microphone;
    generating an air conduction microphone signal;
    using the alternative sensor signal and the air conduction microphone signal to estimate (604) a likelihood of a speech state, wherein the likelihood of the speech state is based on a correlation between the alternative sensor signal and the air conduction microphone signal; and
    using the likelihood of the speech state to estimate (606) the noise-reduced value.

2.  The method of claim 1 wherein using the likelihood of the speech state to estimate the noise-reduced value comprises using the likelihood of the speech state and an expectation value for the noise-reduced value to estimate the noise-reduced value.

3.  The method of claim 2 wherein the expectation value for the noise-reduced value is based on the alternative sensor signal and the air conduction microphone signal.

4.  The method of claim 1 wherein estimating a likelihood of a speech state comprises estimating a separate likelihood for each of a plurality of speech states and wherein using the likelihood of the speech state to estimate the noise-reduced value comprises using the likelihoods for each speech state in the plurality of speech states.

5.  The method of claim 4 wherein using the likelihoods for each speech state in the plurality of speech states comprises using the likelihoods for each speech state to weight expectation values for the noise-reduced value.

**6.** The method of claim 1 wherein estimating a likelihood of a speech state comprises estimating a separate likelihood component for each of a set of frequency components and combining the separate likelihood components to form the estimate of the likelihood of the speech state.

**7.** The method of claim 1 further comprising using the estimate of the likelihood of a speech state to determine if a frame of the air conduction microphone signal contains speech.

**8.** The method of claim 7 further comprising using a frame of the air conduction microphone signal that is determined to not contain speech to determine a variance for a noise source and using the variance for the noise source to estimate the noise-reduced value.

**9.** The method of claim 1 further comprising modeling a probability of a noise-reduced value given a state as a distribution having a variance.

**10.** The method of claim 9 further comprising estimating the variance of the distribution as a linear combination of an estimate of a noise-reduced value for a preceding frame and a filtered version of the air conduction microphone signal for a current frame.

**11.** The method of claim 10 wherein the filtered version of the air conduction microphone signal is formed using a filter that is frequency dependent.

**12.** The method of claim 10 wherein the filtered version of the air conduction microphone signal is formed using a filter that is dependent on a signal-to-noise ratio.

**13.** The method of claim 1 further comprising performing an iteration by using the estimate of the noise-reduced value to form a new estimate of the noise-reduced value.

**14.** A computer-readable medium having computer-executable instructions adapted to perform steps comprising:

determining a likelihood of a speech state based on an alternative sensor signal and an air conduction microphone signal, wherein the alternative sensor signal is a signal less sensitive to ambient noise than the signal of an air conduction microphone, and wherein the likelihood of the speech state is based on a correlation between the alternative sensor signal and the air conduction microphone signal; and
using the likelihood of the speech state to estimate a clean speech value.

**15.** The computer-readable medium of claim 14 wherein using the likelihood of the speech state to estimate a clean speech value comprises weighting an expectation value.

**16.** The computer-readable medium of claim 14 wherein using the likelihood of the speech state to estimate a clean speech value comprises:

using the likelihood of the speech state to identify a frame of a signal as a non-speech frame;
using the non-speech frame to estimate a variance for a noise; and
using the variance for the noise to estimate the clean speech value.

**17.** The computer-readable medium of claim 14 wherein estimating a likelihood for a speech state comprises estimating a separate likelihood for each of a plurality of frequency components, and combining the separate likelihoods to form the likelihood for the speech state.

**Patentansprüche**

**1.** Verfahren zum Bestimmen einer Schätzung für einen rauschreduzierten Wert zur Darstellung eines Abschnittes eines rauschreduzierten Sprachsignals, wobei das Verfahren umfasst:

Erzeugen eines Alternativsensorsignals unter Verwendung eines Alternativsensors, wobei der Alternativsensor weniger empfindlich gegenüber Umgebungsrauschen als ein Luftleitungsmikrofon ist;
Erzeugen eines Luftleitungsmikrofonsignals;

Verwenden des Alternativsensorsignals und des Luftleitungsmikrofonsignals zur Schätzung (604) einer Wahrscheinlichkeit eines Sprachzustandes, wobei die Wahrscheinlichkeit des Sprachzustandes auf einer Korrelation zwischen dem Alternativsensorsignal und dem Luftleitungsmikrofonsignal beruht; und

Verwenden der Wahrscheinlichkeit des Sprachzustandes zur Schätzung (606) des rauschreduzierten Wertes.

2. Verfahren nach Anspruch 1, wobei das Verwenden der Wahrscheinlichkeit des Sprachzustandes zur Schätzung des rauschreduzierten Wertes ein Verwenden der Wahrscheinlichkeit des Sprachzustandes und eines Erwartungswertes für den rauschreduzierten Wert zur Schätzung des rauschreduzierten Wertes umfasst.

3. Verfahren nach Anspruch 2, wobei der Erwartungswert für den rauschreduzierten Wert auf dem Alternativsensorsignal und dem Luftleitungsmikrofonsignal beruht.

4. Verfahren nach Anspruch 1, wobei das Schätzen einer Wahrscheinlichkeit eines Sprachzustandes ein Schätzen einer getrennten Wahrscheinlichkeit für jeden aus einer Mehrzahl von Sprachzuständen umfasst und wobei das Verwenden der Wahrscheinlichkeit des Sprachzustandes zur Schätzung des rauschreduzierten Wertes ein Verwenden der Wahrscheinlichkeiten für jeden Sprachzustand in der Mehrzahl von Sprachzuständen umfasst.

5. Verfahren nach Anspruch 4, wobei das Verwenden der Wahrscheinlichkeiten für jeden Sprachzustand in der Mehrzahl von Sprachzuständen ein Verwenden der Wahrscheinlichkeiten für jeden Sprachzustand zur Gewichtung von Erwartungswerten für den rauschreduzierten Wert umfasst.

6. Verfahren nach Anspruch 1, wobei das Schätzen einer Wahrscheinlichkeit eines Sprachzustandes ein Schätzen einer getrennten Wahrscheinlichkeitskomponente für jede aus einem Satz von Frequenzkomponenten und ein Kombinieren der getrennten Wahrscheinlichkeitskomponenten zur Bildung der Schätzung der Wahrscheinlichkeit des Sprachzustandes umfasst.

7. Verfahren nach Anspruch 1, des Weiteren umfassend ein Verwenden der Schätzung der Wahrscheinlichkeit eines Sprachzustandes zur Bestimmung, ob ein Frame des Luftleitungsmikrofonsignals Sprache enthält.

8. Verfahren nach Anspruch 7, des Weiteren umfassend ein Verwenden eines Frames des Luftleitungsmikrofonsignals, der als keine Sprache enthaltend bestimmt ist, zur Bestimmung einer Varianz für eine Rauschquelle und Verwenden der Varianz für die Rauschquelle zur Schätzung des rauschreduzierten Wertes.

9. Verfahren nach Anspruch 1, des Weiteren umfassend ein Modellieren einer Wahrscheinlichkeit eines rauschreduzierten Wertes bei einem gegebenen Zustand als Verteilung mit einer Varianz.

10. Verfahren nach Anspruch 9, des Weiteren umfassend ein Schätzen der Varianz der Verteilung als Linearkombination einer Schätzung eines rauschreduzierten Wertes für einen vorhergehenden Frame und einer gefilterten Version des Luftleitungsmikrofonsignals für einen aktuellen Frame.

11. Verfahren nach Anspruch 10, wobei die gefilterte Version des Luftleitungsmikrofonsignals unter Verwendung eines Filters gebildet wird, der frequenzabhängig ist.

12. Verfahren nach Anspruch 10, wobei die gefilterte Version des Luftleitungsmikrofonsignals unter Verwendung eines Filters gebildet wird, der von einem Signal-RauschVerhältnis abhängig ist.

13. Verfahren nach Anspruch 1, des Weiteren umfassend ein Durchführen einer Iteration durch Verwenden der Schätzung des rauschreduzierten Wertes zur Bildung einer neuen Schätzung des rauschreduzierten Wertes.

14. Computerlesbares Medium mit computerausführbaren Anweisungen, die dafür ausgelegt sind, Schritte durchzuführen, die umfassen:

Bestimmen einer Wahrscheinlichkeit eines Sprachzustandes auf Grundlage eines Alternativsensorsignals und eines Luftleitungsmikrofonsignals, wobei das Alternativsensorsignals ein Signal ist, das gegenüber Umgebungsrauschen weniger empfindlich als das Signal eines Luftleitungsmikrofons ist, und wobei die Wahrscheinlichkeit des Sprachzustandes auf einer Korrelation zwischen dem Alternativsensorsignal und dem Luftleitungsmikrofonsignal beruht; und

Verwenden der Wahrscheinlichkeit des Sprachzustandes zur Schätzung eines reinen Sprachwertes.

**15.** Computerlesbares Medium nach Anspruch 14, wobei das Verwenden der Wahrscheinlichkeit des Sprachzustandes zur Schätzung eines reinen Sprachwertes ein Gewichten eines Erwartungswertes umfasst.

**16.** Computerlesbares Medium nach Anspruch 14, wobei das Verwenden der Wahrscheinlichkeit des Sprachzustandes zur Schätzung eines reinen Sprachwertes umfasst:

Verwenden der Wahrscheinlichkeit des Sprachzustandes zur Identifizierung eines Frames eines Signals als Nicht-Sprach-Frame;
Verwenden des Nicht-Sprach-Frames zur Schätzung einer Varianz für ein Rauschen; und
Verwenden der Varianz für das Rauschen zur Schätzung des reinen Sprachwertes.

**17.** Computerlesbares Medium nach Anspruch 14, wobei das Schätzen einer Wahrscheinlichkeit für einen Sprachzustand ein Schätzen einer getrennten Wahrscheinlichkeit für jede aus einer Mehrzahl von Frequenzkomponenten und ein Kombinieren der getrennten Wahrscheinlichkeiten zur Bildung der Wahrscheinlichkeit für den Sprachzustand umfasst.

**Revendications**

**1.** Procédé de détermination d'une estimation relative à une valeur de bruit réduit représentant une partie d'un signal vocal à bruit réduit, le procédé comprenant :

la génération d'un signal de capteur de substitution à l'aide d'un capteur de substitution, le capteur de substitution étant moins sensible au bruit ambiant qu'un microphone à conduction aérienne ;
la génération d'un signal de microphone à conduction aérienne ;
l'utilisation du signal de capteur de substitution et du signal de microphone à conduction aérienne pour estimer (604) une vraisemblance d'un état vocal, la vraisemblance de l'état vocal étant basée sur une corrélation entre le signal de capteur de substitution et le signal de microphone à conduction aérienne ; et
l'utilisation de la vraisemblance de l'état vocal pour estimer (606) la valeur de bruit réduit.

**2.** Procédé selon la revendication 1, dans lequel l'utilisation de la vraisemblance de l'état vocal pour estimer la valeur de bruit réduit comprend l'utilisation de la vraisemblance de l'état vocal et d'une valeur d'estimation de la valeur de bruit réduit pour estimer la valeur de bruit réduit.

**3.** Procédé selon la revendication 2, dans lequel la valeur d'estimation de la valeur de bruit réduit est basée sur le signal de capteur de substitution et le signal de microphone à conduction aérienne.

**4.** Procédé selon la revendication 1, dans lequel l'estimation d'une vraisemblance d'un état vocal comprend l'estimation d'une vraisemblance séparée pour chaque état vocal d'une multiplicité d'états vocaux et dans lequel l'utilisation de la vraisemblance de l'état vocal pour estimer la valeur de bruit réduit comprend l'utilisation des vraisemblances pour chaque état vocal de la multiplicité d'états vocaux.

**5.** Procédé selon la revendication 4, dans lequel l'utilisation des vraisemblances pour chaque état vocal de la multiplicité d'états vocaux comprend l'utilisation des vraisemblances pour chaque état vocal pour pondérer des valeurs d'espérance de la valeur de bruit réduit.

**6.** Procédé selon la revendication 1, dans lequel l'estimation d'une vraisemblance d'un état vocal comprend l'estimation d'une composante de vraisemblance séparée pour chaque composante de fréquence d'une série de composantes de fréquence et la combinaison des composantes de vraisemblance séparées pour former l'estimation de la vraisemblance de l'état vocal.

**7.** Procédé selon la revendication 1, comprenant en outre l'utilisation de l'estimation de la vraisemblance d'un état vocal pour déterminer si une trame du signal de microphone à conduction aérienne contient ou non des signaux vocaux.

**8.** Procédé selon la revendication 7, comprenant en outre l'utilisation d'une trame du signal de microphone à conduction aérienne qui est déterminée comme ne contenant pas de signaux vocaux pour déterminer une variance relative à une source de bruit et l'utilisation de la variance de la source de bruit pour estimer la valeur de bruit réduit.

**9.** Procédé selon la revendication 1, comprenant en outre la modélisation d'une probabilité d'une valeur de bruit réduit étant donné un état en tant que distribution comportant une variance.

**10.** Procédé selon la revendication 9, comprenant en outre l'estimation de la variance de la distribution en tant que combinaison linéaire d'une estimation d'une valeur de bruit réduit pour une trame précédente et d'une version filtrée du signal de microphone à conduction aérienne pour une trame courante.

**11.** Procédé selon la revendication 10, dans lequel la version filtrée du signal de microphone à conduction aérienne est formée à l'aide d'un filtre dépendant de la fréquence.

**12.** Procédé selon la revendication 10, dans lequel la version filtrée du signal de microphone à conduction aérienne est formée à l'aide d'un filtre qui est dépendant d'un rapport signal à bruit.

**13.** Procédé selon la revendication 1, comprenant en outre l'exécution d'une itération à l'aide de l'estimation de la valeur de bruit réduit pour former une nouvelle estimation de la valeur de bruit réduit.

**14.** Support lisible par ordinateur comportant des instructions exécutables par ordinateur adaptées pour mettre en oeuvre les étapes comprenant :

la détermination d'une vraisemblance d'un état vocal sur la base d'un signal de capteur de substitution et d'un signal de microphone à conduction aérienne, le signal de capteur de substitution étant un signal moins sensible au bruit ambiant que le signal d'un microphone à conduction aérienne, et dans lequel la vraisemblance de l'état vocal est basée sur une corrélation entre le signal de capteur de substitution et le signal de microphone à conduction aérienne ; et

l'utilisation de la vraisemblance de l'état vocal pour estimer une valeur vocale propre.

**15.** Support lisible par ordinateur selon la revendication 14, dans lequel l'utilisation de la vraisemblance de l'état vocal pour estimer une valeur vocale propre comprend la pondération d'une valeur d'espérance.

**16.** Support lisible par ordinateur selon la revendication 14, dans lequel l'utilisation de la vraisemblance de l'état vocal pour estimer une valeur vocale propre comprend :

l'utilisation de la vraisemblance de l'état vocal pour identifier une trame d'un signal comme étant une trame non vocale ;

l'utilisation de la trame non vocale pour estimer une variance relative à un bruit ; et

l'utilisation de la variance du bruit pour estimer la valeur vocale propre.

**17.** Support lisible par ordinateur selon la revendication 14, dans lequel l'estimation d'une vraisemblance d'un l'état vocal comprend l'estimation d'une vraisemblance séparée pour chaque composante de fréquence d'une série de composantes de fréquence, et la combinaison des vraisemblances séparées pour former la vraisemblance de l'état vocal.

| SYSTEM MEMORY | 130 |
| --- | --- |

(ROM) 131

BIOS 133

(RAM) 132

OPERATING
SYSTEM 134

APPLICATION
PROGRAMS 135

OTHER
PROGRAM
MODULES 136

PROGRAM
DATA 137

PROCESSING
UNIT

120

VIDEO
INTERFACE

190

195

OUTPUT
PERIPHERAL
INTERFACE

121

MONITOR
191

PRINTER
196

SPEAKERS
197

140

NON-
REMOVABLE
NON-VOL.
MEMORY
INTERFACE

150

REMOVABLE
NON-VOL.
MEMORY
INTERFACE

160

USER INPUT
INTERFACE

170

NETWORK
INTERFACE

LOCAL AREA
NETWORK

171

141

151

155

152

156

110

100

WIDE AREA
NETWORK

MODEM
172

173

KEYBOARD
162

POINTING
DEVICE
161

MICROPHONE
163

REMOTE
COMPUTER
180

REMOTE
APPLICATION
PROGRAMS
185

| OPERATING SYSTEM 144 | APPLICATION PROGRAMS 145 | OTHER PROGRAM MODULES 146 | PROGRAM DATA 147 |
| --- | --- | --- | --- |

FIG. 1

FIG. 2

FIG.

316 ─╲→ **A/D** 404

318 ─╲→ **A/D** 414

**FRAME CONSTRUCTOR** 406

**FRAME CONSTRUCTOR** 416

**FFT** 408

**FFT** 418

**CLEAN SIGNAL ESTIMATOR** 420

324

**IFFT** 422

FIG. 4

FIG. 5

600 — IDENTIFY FRAMES WHERE USER IS NOT SPEAKING USE THESE FRAMES TO DETERMINE VARIANCES OF NOISE SOURCES

602 — DETERMINE SPEECH VARIANCE

604 — DETERMINE LIKELIHOOD OF EACH SPEECH STATE

606 — DETERMINE CLEAN SPEECH ESTIMATE

FIG. 6

**EP 1 891 624 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004111260 A1